Europäisches Patentamt

European Patent Office

Office européen des brevets

(11) Veröffentlichungsnummer: **0 261 379 B1**

# EUROPÄISCHE PATENTSCHRIFT

(45) Veröffentlichungstag der Patentschrift: **27.02.91**

(51) Int. Cl.⁵: **B60J 7/20**

(21) Anmeldenummer: **87111786.7**

(22) Anmeldetag: **14.08.87**

(54) **Aufklappbares Verdeck für einen Personenwagen.**

(30) Priorität: **20.09.86 DE 3632058**

(43) Veröffentlichungstag der Anmeldung:
**30.03.88 Patentblatt 88/13**

(45) Bekanntmachung des Hinweises auf die
Patenterteilung:
**27.02.91 Patentblatt 91/09**

(84) Benannte Vertragsstaaten:
**ES FR GB IT**

(56) Entgegenhaltungen:
**US-A- 2 191 269**
**US-A- 2 869 923**

(73) Patentinhaber: **INDUSTRIEKREDITBANK AG
DEUTSCHE INDUSTRIEBANK
Bismarckstrasse 105
D-1000 Berlin 12(DE)**

(72) Erfinder: **Treser, Walter
Auenstrasse 23
D-8070 Ingolstadt(DE)**

(74) Vertreter: **Lüke, Dierck-Wilm, Dipl.-Ing.
Gelfertstrasse 56
D-1000 Berlin 33(DE)**

**Beschreibung**

Die Erfindung bezieht sich auf ein aufklappbares Verdeck für einen Personenwagen gemäß dem Oberbegriff des Anspruches 1.

Ein aufklappbares Verdeck dieser Art ist aus der US-A-2/191/269 vorbekannt. Hierbei besitzt das starre Klappdach vordere Dreh-Gleitlager, die mit vorderen Führungsschienen zusammenarbeiten, und hintere Führungseinrichtungen, die aus einer Zahnstange auf der Innenseite des Klappdaches, aus einem motorisch angetriebenen Zahnritzel und aus einer Gegenrolle gebildet sind, die auf der Außenseite des starren Klappdaches abrollt und dieses mit seiner inneren zahnstange gegen das Antriebsritzel drückt. Angetrieben durch das motorisch betriebene Antriebsritzel kann das Klappdach zunächst um die Dreh-Gleitlager geschwenkt und anschließend entlang der vorderen Führungsschienen in das Innere des Personenwagens eingefahren werden, wobei es eine Lage hinter der Sitzbank bzw. teilweise unter der Sitzbank einnimmt. Nachteilig hierbei ist, daß die hinteren Führungseinrichtungen aus zahnstange, Ritzel und Führungsrolle einen erheblichen Raumaufwand benötigen, keine präzise Führung der Schwenk- und Einfahrbewegung des Klappdaches ermöglichen und ferner für heutige Personenwagen-Konstruktionen unzulässig sind, da eine zahnstange auf der Innenseite eines starren Klappdaches gegen die Sicherheitsvorschriften bei Personenwagen verstößt.

Es ist ferner aus der DE-B-10 63 911 bekannt, ein komplettes Klappdach abzuheben und über eine Gestängeführung etwas schräg nach hinten im Kofferraum zu verstauen. Die Bewegung des Klappdaches erfolgt dabei im wesentlichen parallel, d.h. das komplette Klappdach liegt in ähnlicher Stellung im Kofferraum, wie es auf das Dach aufgesetzt ist, ohne daß eine Drehung oder Klappung des Daches durchgeführt wird. Nachteilig an dieser Ausführung ist, daß ein großer Kofferraum vorhanden sein muß, in den das Dach in seiner waagerechten Lage paßt und der bei abgenommenem Dach für einen weiteren Gebrauch nicht mehr zur Verfügung steht.

Es ist ferner aus der DE-L-33 17 6o3 ein Klappdach für Personenwagen bekannt, das aus einem im geschlossenen Zustand etwa waagerechten oberen Dachbereich und aus einem zur Rückseite des Personenwagens hin abfallenden rückseitigen Dachbereich mit Seitenteilen besteht. Zwischen den Seitenwänden und dem Klappdach sind Drehlager angebracht, wobei das Klappdach komplett unter die Fensterbrüstung gedreht werden kann. Hierbei ist es möglich, das Klappdach schnell und bequem zu öffnen sowie relativ raumsparend zu verstauen, ohne daß der gesamte Kofferraum verlorengeht. Allerdings ist noch eine Heckabdeckung erforderlich, die beim Öffnen des Klappverdeckes ebenfalls geöffnet werden muß, um das Klappdach unterzubringen.

Der Erfindung liegt von daher die Aufgabe zugrunde, das aufklappbare Verdeck für Personenwagen der gattungsgemäßen Art dahingehend weiterzubilden, daß das starre Klappdach bei einfacher Handhabung möglichst raumsparend durch eine relativ schmale Öffnung in der Karosserie verstaubar ist und exakt geführt werden kann, wobei die Bauelemente der hinteren Führungseinrichtungen ungefährlich für die Personenwagen-Insassen sind.

Die Lösung dieser Aufgabe ergibt sich aus den kennzeichnenden Merkmalen des Anspruches 1. Erfindungsgemäß werden als hintere Führungseinrichtungen entsprechend den vorderen Führungsschienen angeordnete Führungsschienen auf den Innenseitenwänden des Personen-wagens verwendet.Das beim Aufklappen zunächst um die vorderen Drehlager geschwenkt werdende starre Klappdach wird hierbei in den hinteren Führungsschienen mittels in diese eingreifender Führungsstifte geführt, so lange, bis die vorderen Drehlager in ihre Gleitposition kommen, in welcher die vorderen Führungsstifte der Seitenteile des Klappdaches in den vorderen Führungsschienen geführt werden. Das starre Klappdach wird nunmehr in etwa senkrechter Lage nach unten in seine geöffnete Lage geführt. Die erfindungsgemäße Anordnung der Führungsschienenpaare auf den inneren Seitenwänden des Personenwagens bewirkt hierbei eine exakte Führung des Klappdaches bis in seine Endlage. Die Führungseinrichtungen des Klappdaches sind raumsparend, ermöglichen eine einfache Handhabung des Klappdaches und führen dieses mit einer solchen Präzision, daß der für das Einschwenken des Klappdaches in seine geöffnete Lage erforderliche Raumbedarf innerhalb der Karosserie des Personenwagens sehr gering ist.

Die Führungsschienen auf einer jeden Seitenwand des Personenwagens haben einen Abstand, der gleich dem Abstand der Dreh-Gleit-Lager oder kleiner ist. Durch diesen Abstand der Führungsschienen bzw. durch die Abstandsänderungen entlang den Führungsschienen ist eine Bewegungskurve des in diesen über die Dreh-Gleit-Lager gehaltenen Klappdaches bestimmt. Wenn die Führungsschienen relativ weit bis zum Abstand der Dreh-Gleit-Lager auseinanderliegen, kommt das Klappdach in eine mehr horizontale Lage, z.B. in die Geschlossenstellung. Wenn dagegen der Abstand entlang der Bewegungskurve sich verengt, wird das Klappdach zwangsweise geführt und in eine mehr senkrechte Stellung gebracht. Somit wird erreicht, daß das Klappdach auf einer genau vorgebbaren Bewegungskurve im Fahrzeug versenkt werden kann. Entsprechend dieser genauen Führung kann das Klappdach in einem sehr schmalen Einführungsschlitz und einen genau auf die Abmessungen des Klappdaches abgestellten Stauraum mit geringem Volumen versenkt werden.

Damit braucht bei entsprechender Führung der Kofferraum praktisch nicht berührt oder merklich verkleinert zu werden. Zweckmäßigerweise wird das Klappdach in seiner unteren Endlage etwa senkrecht hinter die hinteren Sitze oder die rückwärtige Ablage gebracht, was durch die im wesentlichen nach unten verlaufenden Führungsschienen bei entsprechender Abstandsführung erreichbar ist. Beim Öffnen des Klappdaches sind keine zusätzlichen Klappen, hinteren Sitzbänke oder dgl. zu öffnen oder zu bewegen. Es ist daher auch eine einfache Automatisierung durch einen Motorantrieb möglich. Der schmale Einführschlitz braucht nicht abgedeckt zu werden.

Wegen der durch die Zwangsführung vorgegebenen, bestimmten Bewegungskurve des Klappdaches kann ohne weiteres erreicht werden, daß sich das Klappdach beim Öffnen sofort insgesamt von allen Dichtungen einschließlich eines geschlossenen Fensters abhebt. Dies bedeutet zum einen, daß das Klappdach auch bei geschlossenem Fenster zu öffnen ist, und zum anderen, daß das Klappdach beim Schließen gegen Dichtungen fährt und somit sich selbst sicher abdichtet.

Durch den speziell gebildeten Abstand der beiden Führungsschienen einer Seitenwand des Personenwagens wird vorteilhaft zu Anfang der Öffnungsbewegung ein Aufklappen des Klappdaches und damit ein Abheben von Dichtungen erreicht, wobei das Dach bereits in seiner frühen Öffnungsphase weitgehend in die senkrechte Lage gebracht wird. Dabei wird das Klappdach nach unten durch den Einführungsschlitz geschoben, wodurch auch nur ein relativ schmaler, schachtförmiger Stauraum erforderlich ist.

Um große Schwenk- oder Klappbewegungen des Klappdaches vorteilhaft, insbesondere zu Beginn der Öffnungsbewegung, durchführen zu können, ist das Ende einer der beiden Führungsschienen, insbesonder das obere Ende, als Drehlager ausgebildet. Dies bedeutet, daß zum Bewegungsbeginn das Klappdach um einen solchen Drehpunkt gedreht wird, wobei der andere Lagerpunkt in der anderen, um den Drehpunkt kreisförmig verlaufenden Führungsschiene geführt ist. Nach einer bestimmten Drehung gleitet dann das im Drehlager gehaltende Dreh-Gleit-Element aus diesem heraus, wodurch die Gleitbewegung freigegeben wird. Diese Maßnahme fördert einen reibungslosen Bewegungsablauf bei geringem Kraftaufwand. Entsprechend einer größeren Schwenkbewegung beim Beginn der Öffnung kann es je nach Gegebenheiten am Fahrzeug auch zweckmäßig sein, eine größere Schwenkbewegung am Schluß der Öffnungsbewegung durchzuführen, was ebenfalls mit entsprechenden Drehlagern am unteren Ende einer der beiden Führungschienen erreichbar ist. Ein solcher, als Drehlager ausgebildeter Endanschlag am Ende einer Führungsschiene ergibt zudem eine sichere Endlagefixierung und Halterung.

Es ist ein Drehlager nicht unmittelbar an der Führungsschiene geschaffen, sondern es ist ein separater Drehpunkt mit automatischer Gleitfreigabe nach einer bestimmten Drehbewegung vorgesehen. Beispielsweise kann ein solcher Drehpunkt an der unteren, vorderen Stelle der Seitenteile des Klappdaches liegen. Damit eine Drehbewegung möglich wird, sind in einem bestimmten Bereich die Führungsschienen um diesen Drehpunkt konzentrisch ausgebildet. Auch hier wird eine feste Endlagefixierung mit der vorteilhaften Drehbewegung in der ersten Öffnungsphase erreicht.

Je nach Gegebenheiten am Fahrzeug kann die Bewegungskurve für das Klappdach unterschiedlich geführt werden. Um nicht nur in den Endlagen dazu größere Schwenkungen durchführen zu müssen, sind gemäß Anspruch 3 Haltepunkte an den Führungsschienen vorgesehen, um die das Klappdach bei gleichzeitiger Zwangsführung durch die andere Führungsschiene geschwenkt wird, wobei nach einer bestimmten Drehbewegung um einen solchen Haltepunkt die Gleitbewegung wieder freigegeben wird. Diese Haltepunkte brauchen nicht unmittelbar an der Führungsschiene geschaffen zu werden, sondern können auch durch weiter abliegende Anschläge verwirklicht sein.

Die Ansprüche 4 und 5 geben an, wie die Haltepunkte mit automatischer Freigabe der Gleitbewegung nach einer bestimmten Drehbewegung des Klappdaches zweckmäßig ausgeführt sein können. Die Ausführungsbeispiele sind funktionsfähig sowie einfach und kostengünstig zu realisieren.

Für eine gute Endlagefixierung in der Offenstellung und um das Klappdach im eingefahrenen Zustand aus dem Bereich des Einführschlitzes noch etwas wegzuklappen, ist es zweckmäßig, eine der Führungsschienen in eine horizontale Lage abzuknicken, wodurch eine entsprechende Bewegung erzielt wird.

Gemäß Anspruch 6 ist zum Öffnen des Klappdaches nur ein schmaler Querschlitz als Einführschlitz an der Karosserie vorgesehen, der in seiner Breite nur etwa der Stärke des Dachaufbaues entspricht.

Es versteht sich, daß die Führungsschienen-Anordnungen zu beiden Seiten des Fahrzeugs symmetrisch sind.

Die Erfindung ist nachfolgend anhand eines in den Zeichnungen dargestellten Ausführungsbeispieles eines aufklappbaren Verdeckes für einen Personenwagen näher erläutert.

Es zeigen

Fig. 1    eine Schemazeichnung eines Personenkraftwagens mit Klappdach mit den einzelnen Bewegungsphasen beim Öffnen,

Fig. 2    eine vergrößerte Ansicht der Lagerstellen am rückseitigen Dachbereich,

Fig. 3    die schematische Darstellung eines Drehpunkts mit automatischer Freigabe der Drehbewegung.

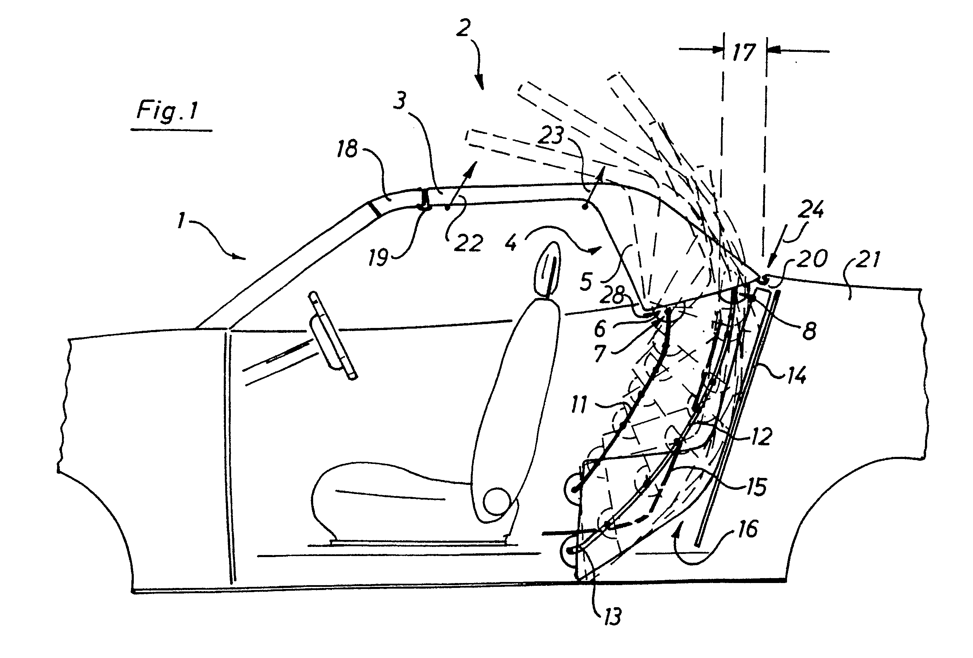

In Fig. 1 ist ein Personenkraftwagen 1 mit einem einheitlichen, festen und stabilen Klappdach 2 dargestellt, das aus einem ersten waagrechten, oberen Dachbereich 3 und einem zur Rückseite des Pkw hin abfallenden, rückseitigen zweiten Dachbereich 4 besteht. Der Dachbereich 4 ist seitlich mit Seitenteilen 5 nach vorne gezogen.

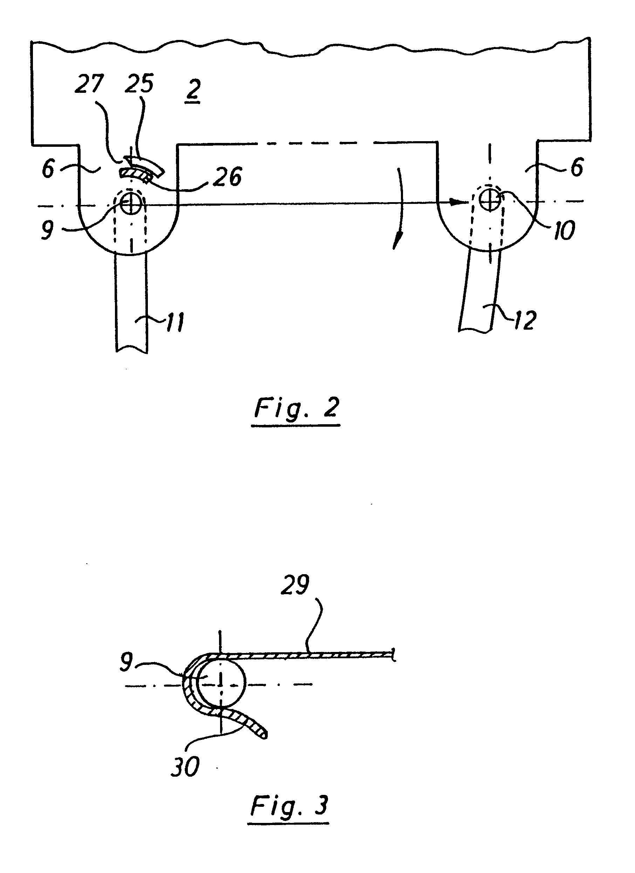

Fig. 1 ist schematisch dargestellt, bzw. als Längsschnitt durch das Fahrzeug bei abmontierter Innenverkleidung zu betrachten, so daß die Lagerung des Klappdachs 2 zu erkennen ist. Dazu sind an der Unterseite der Seitenteile 5 des Klappdachs zwei im Abstand liegende Fortsätze 6 angebracht, an denen Dreh-Gleit-Lager-Elemente 7, 8, beispielsweise in Form von querstehenden Stiften 9, 10 (siehe Fig. 2), befestigt sind.

Die Dreh-Gleit-Lager-Elemente 7, 8 sind in zwei nebeneinander im Abstand an den Seitenwänden des Pkw (an jeder Seite des Pkw) angebrachten Führungsschienen 11, 12 gehalten und geführt. Die in Fahrtrichtung liegende Führungsschiene 11 verläuft von etwas unterhalb der Brüstung nach unten und etwas schräg nach vorne. Die zweite, nach hinten liegende Führungsschiene 12 verläuft etwa parallel, wobei sich der Abstand nach unten hin etwas verringert, ist länger als die Führungsschiene 11 und biegt am unteren Ende 13 nach vorne etwa waag recht um.

Schematisch ist eine Wand 14 als Abschlußwand zu einem rückwärtigem Kofferraum oder Motorraum eingezeichnet und eine Rückwand 15 einer (der Übersichtlichkeit wegen nicht näher dargestellten) rückwärtigen Sitzbank oder Ablage. Die beiden Wände 14, 15 bestimmen den schmalen, schachtförmigen Stauraum 16, in den das Klappdach 2 eingefahren wird. Die Seitenteile 5 des Klappdachs 2 umgreifen dabei die Rückwand 15 bzw. die hintere Sitzbank oder eine Ablage.

Mit dem Bezugszeichen 17 ist die Breite des am Fahrzeug quer verlaufenden Einführschlitzes gekennzeichnet.

Am Fensterrahmen 18 ist eine Regenrinne 19 mit umlaufender Dichtung angebracht, an die von oben her der erste waagrechte Dachbereich 3 dichtend angepreßt ist. Entsprechend ist am zweiten, rückseitigen Dachbereich 4 eine Regenrinne 20 mit umlaufender Dichtung angebracht, die von unten her an das karosserieseitige Blechteil 21 dichtend angepreßt ist. In Fig. 1 ist das Klappdach 2 in seiner geschlossenen Stellung und seiner Offenstellung mit durchgezogenen Linien dargestellt, während die Zwischenstellungen beim Öffnen zur Verfolgung der Bewegungskurve bzw. der Hüllkurven strichliert gezeichnet sind. Beim Öffnen wird der oberste Punkt an der Führungsschiene 11 zu Anfang als Drehpunkt festgehalten (die Maßnahmen dazu werden anhand der Fig. 2 oder 3 weiter unten erläutert). Es wird daher das Dreh-Gleit-Lager-Element 7 in der ersten Bewegungsphase in der Führungsschiene 12 auf einem Kreisbogen nach unten geführt, wodurch das Klappdach 2 mit dem Dachbereich 3 nach oben und dem Dachbereich 4 nach unten schwenkt. Dadurch wird erreicht, daß der Dachbereich 3 sofort von der Regenrinne 19 bzw. ihrer Dichtung abhebt. Weiter hebt sich die zweite Regenrinne 20 sofort vom Blechteil 21 ab. Zudem ist zu erkennen, daß sich das Klappdach 2 sofort vom Scheibenrand einer geschlossenen Scheibe abhebt und diese während des ganzen Bewegungsvorgangs nicht mehr berührt, so daß das Klappdach 2 auch bei geschlossener Scheibe zu öffnen ist. Dies ist mit den Pfeilen 22, 23 und die Abhebbewegung vom Blechteil 21 mit dem Pfeil 24 angedeutet.

Durch die anfängliche Drehbewegung wird das Klappdach 2 bereits weitgehend in eine senkrechtere Richtung gebracht. Nachdem diese Lage durch Schwenken erreicht ist, wird an der Führungsschiene 11 automatisch die Gleitbewegung nach unten freigegeben, so daß das Dach nach unten in den Stauraum 16 zwischen die Wände 14, 15 durch den Einführschlitz 17 bewegt werden kann. Die Stellung bzw. Bewegungskurve des Klappdachs 2 ist dabei durch den Abstand der Führungsschienen 11, 12 bestimmt, wodurch eine Zwangsführung erfolgt. Durch das abknickende, untere Ende 13 der Führungsschiene 12 wird das Klappdach 2 im letzten Bewegungsablauf nochmals nach hinten zur Wand 14 gekippt, wodurch zusätzlich eine gute Endlagefixierung erzielt wird. Der gleiche Effekt könnte auch dadurch erreicht werden, daß die Führungsschiene 11 am unteren Ende nach hinten waagrecht abknickt.

Die Schließbewegung erfolgt in umgekehrter Richtung, wobei in der letzten Schließphase, wenn eine Drehung des Klappdachs 2 um das obere Schienenende der Führungsschiene 11 erfolgt, durch den dabei nach vorne wandernden Schwerpunkt des Klappdachs 2 unterstützt wird.

In Fig. 2 ist der hintere, untere Teil des Klappdachs 2 mit den Fortsätzen 6 schematisch, vergrößert dargestellt. Insbesondere ist eine Ausführung eines Drehpunkts am linken Fortsatz 6 mit automatischer Freigabe gezeigt. Die Dreh-Gleit-Lager-Elemente 7, 8, sind durch Stifte 9, 10 realisiert, die an den Fortsätzen 6 befestigt sind und in die Führungsschienen 11, 12 eingreifen.

Am linken Fortsatz 6 ist weiter ein Kreisbogenstück 25 angeordnet, das gegenüber einem karosserieseitig festen, zweiten Kreisbogenstück 26 verdrehbar ist. Das dachseitige und/oder karosserieseitige Bogenstück 25, 26 kann mit Einlaufschrägen 27 versehen sein.

Die Anordnung gemäß Fig. 2 hat folgende Funktion: In der ersten Phase der Dachöffnung gleitet das Kreisbogenstück 25 auf dem Kreisbogenstück 26, wobei der rechte Teil des Daches 2 nach unten entlang der Führungsschiene 12 gedreht wird; der linke Teil des Daches, insbesondere der Stift 9, bleiben vorerst ortsfest. Nach einer bestimmten Drehbewegung ist das Kreisbogenstück 25 aus dem Bereich des Kreisbogenstückes 26 gedreht, wodurch die Gleitbewegung für den Stift 9 entlang der Führungsschiene 11 freigegeben wird und das Klappdach 2 nach unten gesenkt werden kann. Ähnlich können weitere Haltepunkte entlang den Schienen 11, 12 geschaffen sein.

Mit Fig. 3 ist eine weitere Ausführungsform eines endseitigen Drehpunkts mit automatischer Freigabe gezeigt, der auch beispielsweise an der Stelle 28 (Fig. 1) liegen kann. Dabei ist eine etwa zylindrische, jedoch einseitig offene, Lagerbuchse 29 geschaffen, in der sich beispielsweise der Stift 9 oder ein zusätzlicher Stift solange dreht, bis er durch die Zwangsführung der Führungsschienen aus dem Bereich der einseitig offenen Buchse 29 herausgezogen wird. Vorteilhaft ist auch hier eine nach unten verlaufende Einlaufschräge 30 gebildet.

Zusammenfassend wird festgestellt, daß mit der Erfindung ein aufklappbares Klappverdeck geschaffen wird, das einfach geöffnet werden kann und einen nur geringen Stauraum und Einführschlitz in der Karosserie benötigt.

## Ansprüche

1. Aufklappbares Verdeck für einen Personenwagen, aus einem starren Klappdach mit einem im geschlossenen Zustand etwa waagerechten oberen Dachbereich und mit einem zur Rückseite des Personenwagens hin abfallenden rückseitigen, mit Seitenteilen versehenen Dachbereich aus zwei zwischen den vorderen Bereichen der Seitenteile des Klappdaches und des Seitenwänden des Personenwagens angeordneten vorderen Dreh-Gleit-Lagern, deren Führungsstifte nach einer Schwenkbewegung des Klappdaches an vorderen Führungsschienen verschiebbar sind, die mit den Seitenwänden des Personenwagens verbunden sind, und aus zwei an den hinteren Bereichen der Seitenteile des Klappdaches und den Seitenwänden des Personenwagens angeordneten weiteren Führungseinrichtungen für das Klappdach wobei sich beim Öffnen des Klappdaches eine Bewegungskurve ergibt, bei der zu Anfang der Öffnungsbewegung das Dach um die vorderen Dreh-Gleit-Lager geschwenkt und im weiteren Verlauf der Bewegung mittels der vorderen Führungsschienen und der hinteren Führungseinrichtungen in einer weitgehend senkrechten Lage nach unten in seine Endlage geführt wird, **dadurch gekennzeichnet, daß** die am hinteren Bereich der Seitenteile (5) des Klappdaches (2) angeordneten Führungseinrichtungen aus an den Seitenwänden des Personenwagens (1) angebrachten Führungsschienen (12) und aus an den hinteren Bereichen der Seitenteile (5) angeordneten und in die Führungsschienen (12) eingreifenden Führungsstiften (10) gebildet sind, daß die beiden an beiden Seitenwänden des Personenwagens (1) symmetrisch angeordneten, im wesentlichen von oben nach unten verlaufenden Führungsschienen (11,12) einen Abstand voneinander haben, der gleich dem Abstand der Dreh-Gleit-Lager (7,8) von den Führungsstiften (9,10) an den Seitenteilen (5) entspricht, wobei der Führungsschienenabstand bzw. die Abstandskurve eine vorgebbare Bewegungskurve des Klappdaches (2) bestimmt, daß die beiden Führungsschienen (11,12) jeder Seitenwand des Personenwagens(1)so gegeneinander liegen, daß der Abstand nach unten hin geringer wird und die Führungsschienen (11,12) etwas schräg nach vorne und unten geführt sind, und daß je ein von den Führungsschienen (11,12) getrennt liegender oberer Drehpunkt (28) zwischen den Seitenteilen (5) des Klappdaches (2) und den Seitenwänden des Personenwagens (1) vorgesehen ist, um den die Führungsschienen (11,12) für die erste Bewegungsphase konzentrisch liegen, wobei die vorderen Dreh-Gleit-Lager (7,8) die Gleitbewegung der Seitenteile (5) des Klappdaches (2) nach einer bestimmten Drehbewegung freigeben.

2. Aufklappbares Verdeck nach Anspruch 1, dadurch gekennzeichnet, daß wenigstens eine der Führungsschienen (11,12) im untersten Bereich (13) in eine horizontale Lage abknickt.

3. Aufklappbares Verdeck nach Anspruch 1 oder 2, dadurch gekennzeichnet, daß entlang der Führungsschienen (11,12) wenigstens ein Haltepunkt bzw. Anschlag für die Gleitbewegung vorgesehen ist, um den die zweite Führungsschiene (11,12) einen Kreisbogenabschnitt bildet, wobei der Haltepunkt nach einer bestimmten, um diesen vollführten Drehbewegung die Gleitbewegung wieder freigibt.

4. Aufklappbares Verdeck nach einem der Ansprüche 1 bis 3, dadurch gekennzeichnet, daß die die Gleitbewegung in die vorderen Führungsschienen (11) automatisch nach einer bestimmten Drehung freigebenden vorderen Dreh- Gleit-Lager (7,8) an den vorderen Führungsschienen (11) durch jeweils zwei gegeneinander verdrehbare Kreisbogenstücke (25,26) gebildet sind.

5. Aufklappbares Verdeck nach einem der Ansprüche 1 bis 4, dadurch gekennzeichnet, daß die die Gleitbewegung in die vorderen Führungsschienen (11) automatisch nach einer bestimmten Drehung freigebenden vorderen Dreh-Gleit-Lager (7,8) an den Führungsschienen (11) durch seitlich offene Lagerbuchsen (29) oder Unstetigkeitsstellen im Kurvenverlauf der Führungsschienen (11) gebildet sind.

6. Aufklappbares Verdeck nach einem der Ansprüche 1 bis 5, dadurch gekennzeichnet, daß zum Einfahren des Klappdaches (2) ein schmaler Querschlitz (17) an der Karosserie vorgesehen ist.

## Claims

1. A collapsible hood for vehicles, comprising a rigid folding roof with an upper hood section being approximately horizontal in closed condition, and with a rear hood section being provided with lateral sections and declining towards the rear of the vehicle, two front pivot/sliding bearings arranged between the front sections of the lateral sections of the collapsible hood and the side walls, the guide pins of said pivot/sliding bearings being displaceable after a pivotal movement of the collapsible hood at front guide rails being connected with the side walls of the vehicle, and two further guide devices for the collapsible hood arranged at the rear sections of the side walls of the collapsible hood and the side walls of the vehicle, a movement path resulting when opening the collapsible hood, wherein at the beginning of the opening movement, the hood is pivoted about the front pivot/sliding bearings, and in the further course of movement, is guided by means of the front guide rails and the rear guiding devices in a substantially vertical position towards bottom into its end position,

characterised by that the guide devices disposed at the rear sections of the side sections (5) of the collapsible hood (2) are formed by guide rails (12) arranged at the side walls of the vehicle (1) and by guide pins (10) arranged at the rear sections of the side sections (12) and engaging into the guide rails (12),

that the two guide rails (11, 12) being arranged symmetrically at the two side walls of the vehicle (1) and extending substantially from top to bottom are spaced from each other, said distance corresponding to the distance of the pivot/sliding bearings (7, 8) from the guide pins (9, 10) at the side sections (5), the distance of the guide rails or the distance curve, resp., determining a given movement path of the collapsible hood (2),

that the two guide rails (11, 12) of each side wall of the vehicle (1) are oriented relative to each other so that the distance is slightly reduced towards bottom, and that the guide rails (11, 12) are guided slightly obliquely towards front and towards bottom,

and that one upper point of rotation (28) each arranged separate from the guide rails (11, 12) is provided between the side sections (5) of the collapsible hood (2) and the side walls of the vehicle (1), about which the guide rails (11, 12) for the first movement stage are concentric, the front pivot/sliding bearings (7, 8) releasing the sliding movement of the side sections (5) of the collapsible hood (2) after a certain amount of rotational movement.

2. A collapsible hood according to claim 1, characterised by that at least one of the guide rails (11, 12) is bent-off in the lowermost section (13) into a horizontal position.

3. A collapsible hood according to claim 1 or 2, characterised by that along the guide rails (11, 12) is provided at least one stop point or end stop, resp., for the sliding movement, about which the second guide rail (11, 12) performs a circular arc section, the stop point releasing the sliding movement after a certain rotational movement effected thereabout.

4. A collapsible hood according to one of claims 1 to 3, characterised by that the front pivot/sliding bearings (7, 8) at the front guide rails (11), said pivot/ sliding bearings releasing the sliding movement into the front guide rails (11) automatically after a certain amount of rotation, are formed by two circular arc sections (25, 26) rotatable with respect to each other.

5. A collapsible hood according to one of claims 1 to 4, characterised by that the front pivot/sliding bearings (7, 8) at the front guide rails (11), said pivot/ sliding bearings releasing the sliding movement into the front guide rails (11) automatically after a certain amount of rotation, are formed by laterally open bearing bushings (29) or discontinuity points in the curve shape of the guide rails (11).

6. A collapsible hood according to one of claims 1 to 5,
    characterised by that for driving the collapsible hood (2) in, a narrow introduction slot (17) is provided at the car body.

**Revendications**

1. Toit ouvrant pour véhicules automobiles, comprenant un toit pliant rigide avec une partie du toit environ horizontale en état fermé et avec une partie arrière pourvue de parties latérales et inclinée vers l'arrière du véhicule, deux paliers de pivotement/glissement avant disposés entre les zones avant des parties latérales du toit ouvrant et des parois latérales du véhicule, les chevilles de guidages desdits paliers de pivotement/glissement étant déplaçables à des rails de guidage avant après un mouvement de pivotement du toit ouvrant, lesdits rails étant connectés avec les parois latérales du véhicule, et deux autres dispositifs de guidage pour le toit ouvrant disposés aux zones arrière des parties latérales du toit ouvrant et aux parois latérales du véhicule, lors de l'ouverture du toit ouvrant une courbe de mouvement résultant, dans laquelle au commencement du mouvement d'ouverture le toit est pivoté autour des paliers de pivotement/glissement avant, et dans la course suivante du mouvement, est guidé en une position essentiellement verticale vers le bas dans sa position finale au moyen des rails de guidage avant et des dispositifs de guidage arrière,
**caractérisé en ce**
que les dispositifs de guidage disposés à la zone arrière des parties latérales (5) du toit ouvrant (2) sont formés de rails de guidage (12) disposés aux parois latérales du véhicule et de chevilles de guidage (10) disposées aux zones arrière des parties latérales (5) et s'engrenant dans les rails de guidage (12),
que les deux rails de guidage (11, 12) disposés symétriquement aux deux parois latérales du véhicule (1) et s'étendant essentiellement d'en haut vers le bas ont une distance, qui correspond à la distance des paliers de pivotement/glissement (7, 8) des chevilles de guidage (9, 10) aux parties latérales (5), la distance des rails de guidage ou la courbe de distance définissant une courbe de mouvement donnée du toit ouvrant,
que les deux rails de guidage (11, 12) de chaque paroi latérale du véhicule (1) sont situés l'un par rapport à l'autre de telle sorte, que la distance se réduit vers le bas et les rails de guidage (11, 12) sont guidés un peu obliquement vers le front et bas, et
qu'un point supérieur de rotation (28) chacun étant séparé des rails de guidage (11, 12) est prévu entre les parties latérales (5) du toit ouvrant (2) et les parois latérales du véhicule (1), autour duquel sont situés concentriquement les rails de guidage (11, 12) pour la première étape de mouvement, les paliers de pivotement/glissement avant (7, 8) relâchant le mouvement de glissement des parties latérales (5) du toit ouvrant (2) après un certain mouvement de rotation.

2. Toit ouvrant selon la revendication 1, caractérisé en ce qu'au moins une des rails de guidage (11, 12) est plié dans sa zone la plus basse (13) en une position horizontale.

3. Toit ouvrant selon la revendication 1 ou 2, caractérisé en ce qu'au moins un point d'arrêt ou de butée pour le mouvement de glissement est prévu le long des rails de guidage (11,12), autour duquel le deuxième rail de guidage (11, 12) forme un arc, le point d'arrêt relâchant le glissement après un certain mouvement de rotation autour de celui-ci.

4. Toit ouvrant selon une des revendications 1 à 3, caractérisé en ce que les paliers de pivotement/glissement (7, 8) relâchant automatiquement après un certain mouvement de rotation le mouvement de glissement dans les rails de guidage (11) avant sont réalisés aux rails de guidage (11) avant par deux arcs (25, 26) rotatifs l'un par rapport a l'autre.

5. Toit ouvrant selon une des revendications 1 à 4, caractérisé en ce que les paliers de pivotement/glissement (7, 8) relâchant automatiquement après un certain mouvement de rotation le mouvement de glissement dans les rails de guidage (11) avant sont réalisés aux rails de guidage (11) avant par des coussinets cylindriques (29) ouverts à un côté ou des points de discontinuité dans la courbe des rails de guidage (11).

6. Toit ouvrant selon une des revendications 1 à 5,

caractérisé en ce que pour l'introduction du toit ouvrant (2), seulement une fente étroite latérale est prévue à la carrosserie.

Fig. 1

Fig. 2

Fig. 3